# EUROPÄISCHE PATENTSCHRIFT

(11) **EP 2 627 546 B1**
(45) Veröffentlichungstag und Bekanntmachung des Hinweises auf die Patenterteilung: **02.09.2015**
(21) Anmeldenummer: 11764563.0
(22) Anmeldetag: 05.10.2011
(51) Int. Cl.: B60T 8/40, B60T 8/88

(54) **VERFAHREN ZUR ÜBERWACHUNG EINER BREMSANLAGE SOWIE BREMSANLAGE**
METHOD FOR MONITORING A BRAKE SYSTEM AND BRAKE SYSTEM
PROCÉDÉ DE SURVEILLANCE D'UN SYSTÈME DE FREINAGE ET SYSTÈME DE FREINAGE

(30) Priorität: 19.08.2011 DE 102011081240; 13.10.2010 DE 102010042375
(43) Veröffentlichungstag der Anmeldung: 21.08.2013
(73) Patentinhaber: Continental Teves AG & Co. OHG, 60488 Frankfurt (DE)
(72) Erfinder: JUNGBECKER, Johann, 55576 Badenheim (DE); LINKENBACH, Steffen, 65760 Eschborn (DE); DRUMM, Stefan A., 55291 Saulheim (DE); BESIER, Marco, 65307 Bad Schwalbach (DE); KURBASA, Josko, 35647 Waldsolms (DE); FÜHRER, Jochen, 64287 Darmstadt (DE)
(86) Internationale Anmeldenummer: PCT/EP2011/067376
(87) Internationale Veröffentlichungsnummer: WO 2012/049050

(56) Entgegenhaltungen:
- EP-A1- 1 671 865
- EP-A2- 1 671 863
- WO-A1-00/24618
- DE-A1- 10 141 547
- DE-A1- 10 233 196
- DE-A1- 19 500 545
- DE-A1-102007 001 526

## Beschreibung

Die Erfindung betrifft ein Verfahren zur Überwachung einer Bremsanlage gemäß Oberbegriff von Anspruch 1 sowie eine Bremsanlage gemäß Oberbegriff von Anspruch 6.

In der Kraftfahrzeugtechnik finden "Brake-by-wire"-Bremsanlagen eine immer größere Verbreitung. Solche Bremsanlagen umfassen oftmals neben einem durch den Fahrzeugführer betätigbaren Hauptbremszylinder eine elektrisch steuerbare Druckbereitstellungseinrichtung, mittels welcher in der Betriebsart "Brake-by-wire" eine Betätigung der Radbremsen oder des Hauptbremszylinders stattfindet. Um dem Fahrzeugführer in der Betriebsart "Brake-by-wire" ein angenehmes Pedalgefühl zu vermitteln, umfassen die Bremsanlagen üblicherweise eine Bremspedalgefühl-Simulationseinrichtung. Bei diesen Bremsanlagen können die Radbremse auch ohne aktives Zutun des Fahrzeugführers aufgrund elektronischer Signale betätigt werden. Diese elektronischen Signale können beispielsweise von einem elektronischen Stabilitätsprogramm oder einem Abstandsregelsystem ausgegeben werden.

In der EP 1 950 112 A1 wird "Brake-by-wire"-Bremsanlage für Kraftfahrzeuge mit einem Bremspedal betätigbaren Hauptbremszylinder, einem Pedalwegsimulator und einer Zylinder-Kolben-Anordnung, deren Kolben durch einen elektromechanischen Aktuator betätigbar ist, offenbart. Die Bremsanlage umfasst einen Drucksensor zur Messung des von der Zylinder-Kolben-Anordnung erzeugten Druckes und einen Drucksensor zur Messung des von dem Hauptbremszylinder erzeugten Druckes. In der Anmeldung werden keine näheren Ausführungen dazu gemacht, wie die Funktionsfähigkeit der Bremsanlage überwacht werden kann.

Eine elektrohydraulische Bremsanlage mit mehreren elektromotorisch angetriebenen Bremsdruckgebern wird in der DE 195 00 545 Al beschrieben, wobei eine Betätigung des Bremspedals mittels eines den Betätigungsweg des Bremspedals sensierenden Wegsensors und eines an den Druckraum des Hauptbremszylinder angeschlossenen Drucksensors erfasst wird.

In der DE 102 33 196 A1 wird eine gattungsgemäße Bremsanlage offenbart. Um ein mögliches Anschlagen des Kolbens der Druckbereitstellungseinrichtung zu erkennen, werden der Druck der Druckbereitstellungseinrichtung und der Verschiebeweg des Kolbens mit Werten einer vorgegebenen Grenzlinie verglichen.

In der DE 101 41 547 A1 wird ein Verfahren zur Betätigungswunscherkennung für eine elektrohydraulische Bremsanlage vorgeschlagen. Die DE 10 2007 001 526 A1 offenbart ein Verfahren zur Überwachung einer redundant erfassten Messgröße.

Es ist Aufgabe der vorliegenden Erfindung, ein Verfahren zur Überwachung einer Bremsanlage sowie eine entsprechende Bremsanlage bereitzustellen, welches mit hoher Sicherheit einen Fehler, z.B. eine Leckage oder einen Lufteintrag, in der Bremsanlage erkennt.

Diese Aufgabe wird erfindungsgemäß durch ein Verfahren gemäß Anspruch 1 und eine Bremsanlage gemäß Anspruch 6 gelöst.

Der Erfindung liegt der Gedanke zugrunde, zur Überwachung der Bremsanlage die Stellung des Kolbens der Druckbereitstellungseinrichtung und den damit erzielten Druck mit vorgegebenen Werten zu vergleichen, um so einen fehlerhaften Zustand der Bremsanlage erkennen zu können. Das hierzu vorgegebene Kennfeld der beiden Größen sollte die unter Berücksichtigung von Fertigungstoleranzen und/oder Meßungenauigkeiten zu erwartenden Wertebereiche bei einem fehlerfreien Zustand der Bremsanlage wiedergeben.

Aus den Messwerten der ersten und zweiten Messgröße wird eine aktuelle Systemsteifigkeit als Ableitung der ersten Messgröße nach der zweiten Messgröße oder umgekehrt ermittelt. Diese Teilsystemsteifigkeit, welche eine Systemsteifigkeit von Druckbereitstellungseinrichtung mit Radbremsen wiedergibt, stellt ein Maß für den Funktionsgrad der Bremsanlage dar und kann z.B. mit Schwellenwerten verglichen werden.

Zusätzlich werden eine den Druck des Hauptbremszylinders charakterisierende dritte Messgröße und eine einen Betätigungsweg des Bremspedals charakterisierende vierte Messgröße erfasst und zur Überwachung des Funktionszustandes der Bremsanlage die erfassten Messwerte der dritten und der vierten Messgröße mit einem vorgegebenen Kennfeld von dritter und vierter Messgröße verglichen. Es ist besonders vorteilhaft, wenn in der "Brake-by-wire"-Betriebsart neben der Überwachung der Drückbereitstellungseinrichtung auch eine Überwachung der Bremspedal betätigbaren Betätigungseinrichtung durchgeführt wird. So kann sichergestellt werden, dass in der "Brake-by-wire"-Betriebsart eine Leckage in der Bremspedal betätigbaren Betätigungseinrichtung derart frühzeitig erkennt werden kann, dass im Falle einer Umschaltung in die Rückfallbetriebsart der verbleibende Bremspedalweg für eine Bremsung mit ausreichender Verzögerung ausreichend ist.

Aus den Messwerten der dritten und vierten Messgröße wird eine aktuelle Systemsteifigkeit der Betätigungseinrichtung als Ableitung der dritten Messgröße nach der vierten Messgröße oder umgekehrt ermittelt. Diese Teilsystemsteifigkeit, welche im wesentlichen eine Systemsteifigkeit des Hauptbremszylinders und der Simulationseinrichtung wiedergibt, stellt ein Maß für den Funktionsgrad dar und kann z.B. mit Schwellenwerten verglichen werden.

Aus den beiden Teilsystemsteifigkeiten wird eine Gesamtsteifigkeit bestimmt, deren Wert überwacht wird. So kann die Verfügbarkeit der Bremsanlage in der Rückfall-Betriebsart überwacht werden.

Bevorzugt wird eine Fehlermeldung ausgegeben, wenn die Gesamtsteifigkeit einen vorgegebenen Grenzwert unterschreitet.

Bevorzugt handelt es sich um eine Bremsanlage, bei welcher jeder Bremskreis bzw. jede Radbremse über eine hydraulische Verbindung, besonders bevorzugt mit einem stromlos offenen Trennventil, mit der Bremspedal betätigbaren Betätigungseinrichtung verbunden ist. Außerdem ist jeder Bremskreis bzw. jede Radbremse über eine weitere hydraulische Verbindung, besonders bevorzugt mit einem stromlos geschlossenen Zuschaltventil, mit der Druckbereitstellungseinrichtung verbunden. So kann ein Bremskreis bzw. eine Radbremse alternativ mit dem Druck der Betätigungseinrichtung oder dem Druck der Druckbereitstellungseinrichtung beaufschlagt werden.

Bevorzugt handelt es sich um eine Bremsanlage, bei welcher die Radbremsen in einer "Brake-by-wire"-Betriebsart von der Druckbereitstellungseinrichtung und in einer Rückfall-Betriebsart von der Bremspedal betätigbaren Betätigungseinrichtung mit Druck beaufschlagt werden. Hierzu sind besonders bevorzugt in der "Brake-by-wire"-Betriebsart die Trennventile zwischen den Radbremsen/Bremskreisen und der Bremspedal betätigbaren Betätigungseinrichtung geschlossen und die Zuschaltventile zwischen den Radbremsen/Bremskreisen und der Druckbereitstellungseinrichtung geöffnet. Entsprechend sind in der Rückfall-Betriebsart die Trennventile zwischen den Radbremsen/Bremskreisen und der Bremspedal betätigbaren Betätigungseinrichtung geöffnet und die Zuschaltventile zwischen den Radbremsen/Bremskreisen und der Druckbereitstellungseinrichtung geschlossen.

Das Verfahren wird bevorzugt wiederholt und andauernd während des Betriebes der Bremsanlage, besonders bevorzugt in der "Brake-by-wire"-Betriebsart, durchgeführt. In der "Brake-by-wire"-Betriebsärt_{,} in welcher die Druckbereitstellungseinrichtung mit den Radbremsen verbunden ist, stellt der von der Druckbereitstellungseinrichtung erzeugte Druck den Systemdruck der Bremsanlage dar.

Gemäß einer Weiterbildung des erfindungsgemäßen Verfahrens wird jeweils eine Plausibilisierung der Messwerte der ersten und zweiten Messgröße durchgeführt und es werden lediglich (erfolgreich) plausibilisierte Messwerte der jeweiligen Messgröße zum Vergleich mit dem Kennfeld herangezogen. So braucht die Korrektheit bzw. Qualität der Messwerte der ersten und zweiten Messgröße nicht hinterfragt werden und es kann im Falle eines Abweichens der aktuellen Messwerte von dem zulässigen Bereich des Kennfeldes direkt eine Bewarnung und/oder ein Eingriff in ein Fahrzeugregelsystem oder Fahrzeugmanagement durchgeführt werden.

Auch für die Messwerte der dritten und vierten Messgröße wird bevorzugt jeweils eine Plausibilisierung durchgeführt, und nur plausibilisierte Messwerte der jeweiligen Messgröße werden mit dem Kennfeld von dritter und vierter Messgröße verglichen. Dadurch, dass nur verlässliche Signale/Messwerte der vier Messgrößen zur Überwachung der Bremsanlage, d.h. dem Vergleich mit den beiden Kennfeldern, herangezogen werden, wird eine sehr hohe Zuverlässigkeit bei der Fehlererkennung erreicht.

Gemäß einer bevorzugten Ausführungsform der erfindungsgemäßen Bremsanlage sind die zumindest vier Sensorvorrichtungen zur Erfassung der vier Messgrößen redundant ausgeführt. So kann eine Plausibilisierung der redundant erfassten Messwerte einer Sensorvorrichtung durchgeführt werden. Alternativ ist es bevorzugt, dass eine Messgröße durch zwei unabhängige, z.B. nicht redundante, Sensorvorrichtungen erfasst wird. Eine plausibilisierte Messwerterfassung einer Messgröße kann vorteilhafterweise auch durch eine selbstsichere Sensorvorrichtung erfolgen.

Bevorzugt wird eine Fehlermeldung ausgegeben, wenn die Messwerte der ersten und zweiten Messgröße nicht in einem zulässigen Bereich des vorgegebenen Kennfelds von erster und zweiter Messgröße liegen und/oder wenn die Messwerte der dritten und vierten Messgröße nicht in einem zulässigen Bereich des vorgegebenen Kennfelds von dritter und vierter Messgröße liegen. Diese Fehlermeldung sind vorteilhafterweise teilsystemspezifisch, um eine spätere Fehlerbehebung in der Werkstatt zu vereinfachen.

Bevorzugt ist in die Betätigungseinrichtung der Bremsanlage ein Bremslichtschalter integriert, dessen Signal besonders bevorzugt zur Überwachung und/oder Plausibilisierung der Bremsanlage herangezogen wird. Vorteilhafterweise wird das Signal des Bremslichtschalters bei einem Ausfall der den Betätigungsweg des Bremspedals charakterisierenden Messgröße bzw. der entsprechenden Sensorvorrichtung herangezogen. Weitere bevorzugte Ausführungsformen der Erfindung ergeben sich aus den Unteransprüchen und der nachfolgenden Beschreibung anhand von Figuren.

Es zeigen
- Fig. 1: eine beispielgemäße Bremsanlage, und
- Fig. 2: eine schematische Darstellung zur Veranschaulichung eines Ausführungsbeispiels eines erfindungsgemäßen Verfahrens.

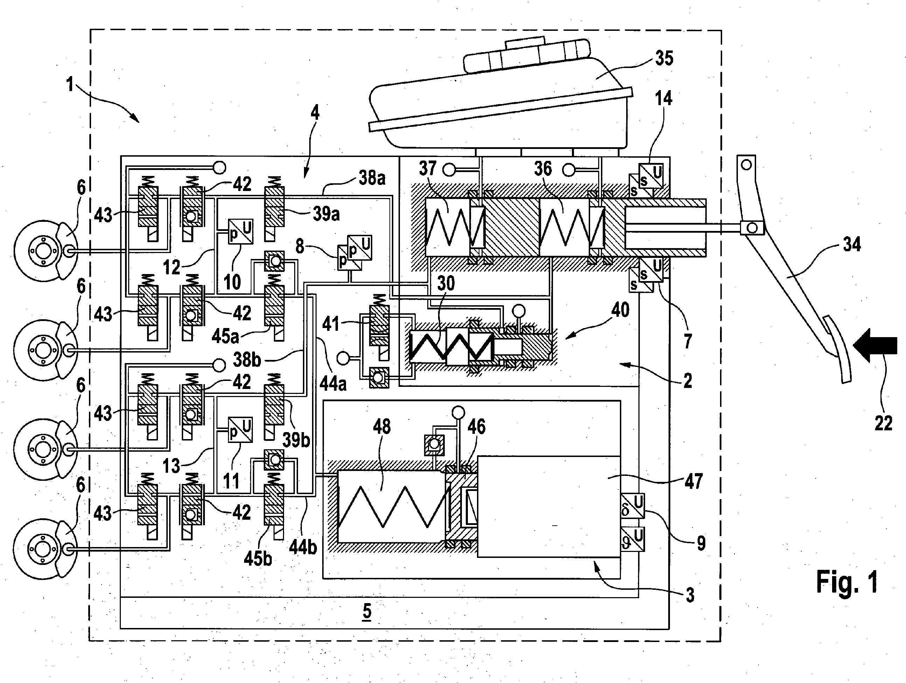

In Fig. 1 ist eine beispielsgemäße Bremsanlage schematisch dargestellt. System 1 umfasst eine Betätigungseinrichtung 2, welche mittels eines Betätigungs- bzw. Bremspedals.34 durch einen Fahrzeugführer (Fahrerbremswunsch 22) betätigbar.ist, eine elektromechanische Betätigungseinheit 3, welche eine elektrisch steuerbare Druckbereitstellungseinrichtung 3 darstellt, eine hydraulische Radbremsdruckmodulationseinrichtung 4 (HCU: hydraulic control unit), an deren Ausgangsanschlüsse Radbremsen 6 angeschlossen sind, und eine elektronische Steuer- und Regeleinheit 5 (ECU: electronic control unit), welche der Ansteuerung und/oder Überprüfung der Komponenten der Bremsanlage dient.

Betätigungseinrichtung 2 umfasst einen zweikreisigen Hauptbremszylinder bzw. Tandemhauptzylinder mit zwei hintereinander angeordneten hydraulischen Kolben, die hydraulische Kammern bzw. Druckräume 36, 37 begrenzen. Die Druckräume 36, 37 stehen über in den Kolben ausgebildete radiale Bohrungen mit einem Druckmittelvorratsbehälter 35 in Verbindung, wobei diese durch eine Relativbewegung der Kolben im Gehäuse des Hauptbremszylinders absperrbar sind. Außerdem ist jeder Druckraum 36, 37 mittels einer hydraulischen Leitung 38a, 38b mit einem Bremskreis 12, 13 mit je zwei Radbremsen 6 verbunden. In den hydraulischen Leitungen 38a, 38b ist je ein Trennventil 39a, 39b eingefügt, das als ein elektrisch betätigbares, vorzugsweise stromlos offenes, 2/2-Wegeventil ausgebildet ist. Eine am Bremspedal 34 angekoppelte Kolbenstange wirkt mit dem ersten Hauptzylinderkolben zusammen, wobei eine den Betätigungsweg des Bremspedals 34 charakterisierende Größe S_{Pedal} von einem vorzugsweise redundant ausgeführten Wegsensor 7 erfasst wird. Ein beispielsgemäß an den Druckraum 37 angeschlossener, vorzugsweise redundant ausgeführter, Drucksensor 8 erfasst den von der Betätigungseinrichtung 2 aufgebauten Druck P_{Pedal}.

Betätigungseinrichtung 2 umfasst weiter eine Simulationseinrichtung 40, welche mit dem Hauptbremszylinder zusammenwirkt und dem Fahrzeugführer in der "Brake-by-wire"-Betriebsart ein angenehmes Pedalgefühl vermittelt. Simulationseinrichtung 40 ist vorzugsweise hydraulisch ausgeführt und besteht im Wesentlichen aus einer Simulatorkammer, einer Simulatorfederkammer mit Simulatorfeder 30 sowie einem diese beiden Kammern voneinander trennenden Simulatorkolben. Dabei ist die Simulatorkammer an zumindest einen Druckraum 36, 37 des Hauptbremszylinders angeschlossen, während die Simulatorfederkammer unter Zwischenschaltung eines elektrisch betätigbaren Simulatorfreigabeventils 41 mit dem Druckmittelvorratsbehälter 35 verbindbar ist.

Druckbereitstellungseinrichtung 3 ist als eine hydraulische Zylinder-Kolben-Anordnung ausgebildet, deren Kolben 46 von einem schematisch angedeuteten Elektromotor 47 unter Zwischenschaltung eines nicht dargestellten Rotations-Translationsgetriebes betätigbar ist. Zur Erfassung einer für die Position/Lage des Kolbens 46 der Druckbereitstellungseinrichtung 3 charakteristischen Größe S_{DBE} ist ein, vorzugsweise redundant ausgeführter, Sensor 9 vorhanden, welcher beispielsgemäß als ein der Erfassung der Rotorlage des Elektromotors 47 dienender Rotorlagensensor 9 ausgeführt ist. Kolben 46 begrenzt einen Druckraum 48, welcher über hydraulische Leitungen 44a, 44b durch Öffnen von elektrisch betätigbaren Zuschaltventilen 45a, 45b mit den Bremskreisen 12, 13 verbindbar ist. Dabei ist den Zuschaltventilen 45a, 45b je ein zu dem Druckraum 48 hin schließendes Rückschlagventil parallel geschaltet.

Zur Modulation des Druckes an den Radbremsen 6 umfasst die hydraulische Druckmodulationseinrichtung 4 vorzugsweise je Radbremse 6 ein Einlass- und ein Auslassventil 42, 43. Die Eingangsanschlüsse der Einlassventile 42 können mit dem Druck der Betätigungseinrichtung 2 (über die Leitungen 38a, 38b mit den Trennventilen 39a, 39b) oder dem Druck der Druckbereitstellungseinrichtung 3 (über die Leitungen 44a, 44b mit den Trennventilen 45a, 45b) versorgt werden. Die Ausgangsanschlüsse der Auslassventile 43 sind über Rücklaufleitungen mit dem drucklosen Druckmittelvorratsbehälter 35 verbunden.

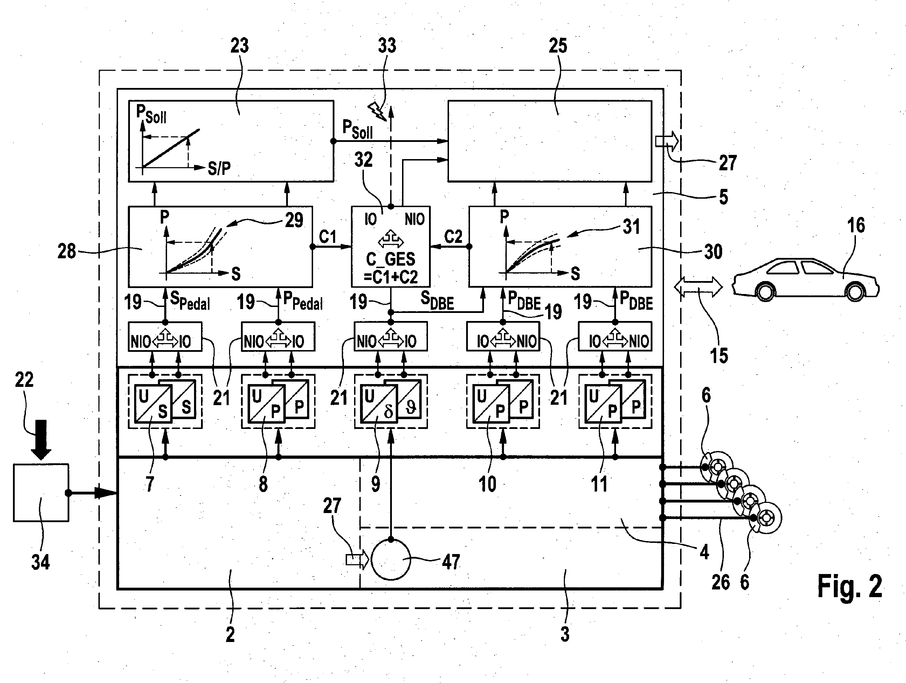

Beispielsgemäß ist in jedem Bremskreis 12, 13 ein (nicht eigensicherer oder nicht redundanter) Drucksensor 10, 11 zum Erfassen des an den Eingangsanschlüsse der zugehörigen Einlassventile 42 herrschenden Drucks angeordnet. Alternativ kann auch in nur einem der beiden Bremskreise 12, 13 ein eigensicher oder redundant ausgeführter Drucksensor angeordnet sein. In beiden Fällen ist vorteilhafterweise in der "Brake-by-wire"-Betriebsart der von der elektrisch steuerbaren Druckbereitstellungseinrichtung 3 in den Bremskreisen 12, 13 erzeugte Druck P_{DBE} als plausibilisiertes Drucksignal vorhanden: im einen Fall durch Vergleich der beiden Signale der zwei unabhängige Drucksensoren 10, 11 an verschiedenen Meßorten und im anderen Fall durch das Signal des redundant oder eigensicher ausgeführten Drucksensors in nur einem der Bremskreise 12, 13. Natürlich ist es dennoch möglich, in jedem Bremskreis 12, 13 einen eigensicheren oder redundanten Drucksensor 10, 11 anzuordnen, wie dies auch in Fig. 2 schematisch dargestellt ist.

Beispielsgemäß umfasst die Bremsanlage einen Bremslichtschalter 14, der vorzugsweise als in die Betätigungseinrichtung 2 integrierter, physikalisch eigenständiger Sensor ausgeführt ist. Das Signal des Bremslichtschalters 14 kann dann bei Ausfall des Wegsensors 7 herangezogen werden und so die Verfügbarkeit der Normalbremsfunktion ("Brake-by-wire"-Betriebsart) erhöhen.

Normalbremsfunktion bedeutet für die Bremsanlage die Erzeugung der vom Fahrer geforderten Druckverstärkung über die Druckbereitstellungseinrichtung 3.

Die Bremsanlage der Fig. 1 stellt in ihrer Normalbremsfunktion eine Fremdkraftbremsanlage dar. Da der Fahrzeugführer in dieser "Brake-by-wire"-Betriebsart durch die geschlossenen Trennventile 39a, 39b von den Bremskreisen 12, 13 getrennt ist und die Bremskreis 12, 13 mittels der Zuschaltventile 45a, 45b mit Druckbereitstellungseinrichtung verbunden sind, entfällt der Fahrzeugführer als subjektives Überwachungsorgan und Entscheidungsinstanz für den funktionalen Zustand der Bremsanlage (z.B. schlechter Entlüftungszustand, mögliche Systemleckagen usw.). Es wäre daher mit Blick auf die Sicherheit des Fahrzeugs und seiner Insassen wünschenswert, wenn eine möglichst objektive Aussage über die Funktionsfähigkeit der Bremsanlage anhand der Sensorik der Bremsanlage getroffen werden kann. Hierzu sind hohe Anforderungen an die Sicherheit und Verfügbarkeit der Signalgenerierung der Sensorik zu stellen. Um die Bremsanlage auf mögliche Systemfehler (wie Leckagen, ungewollter Lufteintrag usw.) zu überprüfen, werden z.B. die verschiedenen Messgrößen in der elektronischen Steuer- und Regeleinheit 5 auf verschiedene Weise plausibilisiert und überwacht. Bei Überschreitung definierter Warnschwellen werden von der Steuer- und Regeleinheit 5 kategorisierte Warnmeldungen an das Fahrzeug 16 (z.B. über eine Fahrzeugschnittstelle 15) und/oder den Fahrer- gemeldet. Entsprechend der Einstufung (Gefahrenpotential) des Fehlers kann über die Fahrzeugschnittstelle 15 in das Sicherheitskonzept des Fahrzeuges 16 (Fahrzeugarchitektur) eingegriffen werden (z.B. Motormanagement, optische / akustische / haptische Warnmeldungen, Weiterfahrt nur mit Werkstattmodus usw.). Ein Ziel besteht dabei in der möglichst hohen Verfügbarkeit und Aufrechterhaltung der Normalbremsfunktion der Bremsanlage (d.h. ein Betrieb in einer Rückfall-Betriebsart sollte möglichst vermieden werden, insbesondere wenn nur ein Einfachfehler in der Bremsanlage auftritt).

In Fig. 2 ist eine schematische Abbildung zur Veranschaulichung eines Ausführungsbeispiels eines erfindungsgemäßen Verfahrens zur Überwachung einer Bremsanlage dargestellt. Ein vom Fahrer über Bremspedal 34 eingesteuerter Fahrerbremswunsch 22 wird mittels zweier (unterschiedlicher) Messgrößen der Betätigungseinrichtung 2 erfasst, beispielsweise dem mittels des redundanten Drucksensors 8 bestimmten Drucks P_{Pedal} des Hauptbremszylinders und dem mittels des redundanten Wegsensors 7 bestimmten Betätigungsweg S_{Pedal} des Bremspedals 34. Für die Druckbereitstellungseinrichtung 3 mit Elektromotor 47 werden ebenfalls zwei Messgrößen erfasst, beispielsweise der mittels des redundanten Drucksensors 10 bestimmte Druck P_{DBE} der Druckbereitstellungseinrichtung und die mittels des redundanten Lagesensors 9 bestimmte Rotorlage des Elektromotors 47, welche ein Maß für die Position oder Lage S_{DBE} des Kolbens 46 der Druckbereitstellungseinrichtung 3 darstellt. Gemäß dem in Fig. 2 dargestellten Beispiel ist noch ein zweiter redundanten Drucksensor 11 zur Bestimmung des Drucks P_{DBE} vorhanden. Drucksensor 11 ist, wie oben bereits beschrieben, optional vorhanden.

Um eine Überwachung der Bremsanlage mit hoher Zuverlässigkeit zu erreichen, werden plausibilisierte Messwerte der Messgrößen P_{Pedal}, S_{Pedal}, P_{DBE}, S_{DBE} (d.h. verlässliche bzw. gültige Signale) für die Überwachung herangezogen, d.h. die Qualität der gelieferten Signale braucht nicht hinterfragt zu werden. Wenn ein Messwert für P_{Pedal}, S_{Pedal}, P_{DBE}, oder S_{DBE} vorliegt, so ist dieser gültig und bilden die zu messende Größte P_{Pedal}, S_{Pedal}, P_{DBE}, oder S_{DBE} innerhalb einer zulässigen Messunsicherheit ab. Kann ein Messwert nicht plausibilisiert werden (z.B. wegen eines mechanischen oder elektrischen Sensordefekts), so wird kein Messwert weitergegeben.

Wie in Fig. 2 dargestellt, werden die Messgrößen P_{Pedal}, S_{Pedal}, P_{DBE}, S_{DBE} beispielsgemäß jeweils redundant erfasst und die beiden erfassten Signale in einem Sensor-Plausibilisierungsblock 21 verglichen. Liegen beide Signale innerhalb eines definierten Toleranzbandes, so wird ein plausibilisierter Messwert 19 für die entsprechende Messgröße P_{Pedal}, S_{Pedal}, P_{DBE}, S_{DBE} ausgegeben. Die Plausibilisierung 21 der Signale wird beispielsgemäß in der Steuer- und Regeleinheit 5 durchgeführt.

Alternativ ist es auch möglich (nicht dargestellt), dass ein Sensor, z.B. der Rotorlagesensor 9, eigensicher ausgeführt ist, d.h. gibt der Sensor ein Signal aus, so handelt es sich um einen gültigen Messwert. Eine Plausibilisierung 21 in der Steuer- und Regeleinheit 5 entfällt dann für diesen Sensor.

Wie oben bereits erwähnt, ist es auch möglich (nicht in Fig. 2 dargestellt), dass eine Messgröße, z.B. der Druck P_{DBE} der Druckbereitstellungseinrichtung, an zwei verschiedenen Stellen durch zwei nicht-redundante Sensoren bestimmt wird (wie in Fig. 1 für die Drucksensoren 10, 11 dargestellt). Die beiden erfassten Signale können dann durch Vergleich in einem Sensor-Plausibilisierungsblock 21 plausibilisiert werden, so dass wieder ein plausibilisierter Messwert 19 für die Messgröße vorliegt.

Zur Überwachung des Funktionszustandes der Bremsanlage, insbesondere der Druckbereitstellungseinrichtung 3 mit angeschlossenen Bremskreisen, ist in der Steuer- und Regeleinheit 5 ein nominelles Kennfeld 31 für den Zusammenhang zwischen Druck P_{DBE} und Kolbenposition S_{DBE} der Druckbereitstellungseinrichtung 3 abgelegt. Kennfeld 31 berücksichtigt die zulässigen Toleranzen, z.B. die mögliche Serienstreuung der P-V-Kennlinie (Druck-Volumenaufnahme-Kennlinie) der Radbremsen 6, die Streuung der Belagsteifigkeit usw. In Block 30 werden die gemessenen Werte für Druck P_{DBE} und Kolbenposition S_{DBE} mit dem vorgegebenen Kennfeld 31 verglichen. Befinden sich die plausibilisierten Messwerte (das Messwerte-Paar (S_{DBE} , P_{DBE})) innerhalb des zulässigen Bereiches des abgelegten Kennfeldes 31 (zwischen den gestrichelten Kurven in Block 30), so befindet sich die Druckbereitstellungseinrichtung 3 im nominell zulässigen Bereich und ist mechanisch und hydraulisch in Ordnung. Im Falle einer Leckage in der Bremsanlage würde z.B. bei gleichbleibender Kolbenposition S_{DBE} der Druck P_{DBE} ständig fallen, so dass beim Vergleich mit dem Kennfeld 31 das Messwerte-Paar unter die untere (gestrichelte) Kurve des zulässigen Bereichs sinken würde. Hieran kann dann eine Leckage erkannt werden. Z.B. im Falle eines Lufteintrags in die Bremsanlage würden die Messwerte-Paare wiederholt unterhalb der unteren (gestrichelten) Kurve des zulässigen Bereichs liegen.

Zur Überwachung des Funktionszustandes der Betätigungseinrichtung 2 (z.B. auf Leckagen, Lufteintrag oder Federbruch der Simulatorfeder 30) ist in der Steuer- und Regeleinheit 5 außerdem ein nominelles Kennfeld 29 für den Zusammenhang zwischen Druck P_{Ped} und Position S_{Ped} der Betätigungseinrichtung 2 abgelegt. Kennfeld 29 wird hauptsächlich durch die Simulatorfeder 30 und deren zulässige Serientoleranz bestimmt. Des Weiteren können in Kennfeld 29 ggf. auch ein zulässiger durch Dichtmanschetten hervorgerufener Reibdruck und die Messunsicherheit der Sensoren 7, 8 berücksichtigt sein. In Block 28 werden die gemessenen Werte für Druck P_{Ped} und Position S_{Ped} mit dem vorgegebenen Kennfeld 29 verglichen. Befinden sich die plausibilisierten Messwerte der Sensoren 7, 8 innerhalb des zulässigen Bereiches des abgelegten Kennfeldes 29 (zwischen den gestrichelten Kurven in Block 28), so befindet sich die Betätigungseinrichtung 2 im nominell zulässigen Bereich und ist mechanisch und hydraulisch in Ordnung.

Plausibilisierte Messwerte für die Messgrößen Sp_{edal} und P_{Pedal} der Sensoren 7 und 8 sind für eine funktionale Überprüfung der Betätigungseinheit 2, aber auch für eine sichere und zuverlässige Erkennung des Fahrerbremswunsches 22 sehr wichtig.

Die plausibilisierten Messwerte S_{Pedal}, P_{Pedal} von Weg- und Drucksensor 7, 8 werden in Block 23 zur Bestimmung eines Sollwertes P_{Soll} für die gewünschte Bremskraftverstärkung herangezogen. Der entsprechende Druck 26 wird über eine beispielsgemäß in der Steuer- und Regeleinheit 5 integrierte Motorsteuerung 25 durch eine entsprechende Ansteuerung 27 des Motors 47 der Druckbereitstellungseinrichtung 3 in den Radbremsen 6 eingestellt.

Im Falle eines Auftretens eines Einfachfehlers in einem der Sensoren 7 oder 8, (d.h. Weg- oder Drucksensor meldet sich als verlässlicher Signallieferant ab) wird die Fahrerwunscherfassung beispielsgemäß auf eine reine Wegs- (Sensor 7) oder Druckinformation (Sensor 8) umgeschaltet, je nach dem welcher Sensor noch plausibilisierte Messwerte liefert. Hierbei kann bei einem Einfachfehler die Bremskraftverstärkung weiter aufrecht erhalten werden. Bezieht man den optional integrierten Bremslichtschalter 14 in das Plausibilisierungskonzept mit ein, so können bei Versagen des Wegsensors 7 die Trennventile 39 weiter angesteuert werden.

Wie oben bereits ausführlich beschrieben werden die plausibilisierten Messwerte S_{Pedal}, P_{Pedal} zur funktionalen Überprüfung (Plausibilisierung) der Betätigungseinheit 2 (Mechanik, Hydraulik) mittels des Blockes 28 herangezogen.

Beispielsgemäß wird in jedem der beiden Blöcke 28 bzw. 30 für das entsprechende Subsystem (Betätigungseinrichtung 2 inkl. Simulationseinrichtung 40 bzw. Druckbereitstellungseinrichtung 3 mit Bremskreisen) aus den entsprechenden aktuellen Messwerte-Paaren (S_{Pedal}, P_{Pedal}) bzw. (S_{DBE}, P_{DBE}) eine aktuelle Einzelsystem-Systemsteifigkeit C1 bzw. C2 berechnet. Die aktuelle Einzelsystem-Systemsteifigkeit C1 bzw. C2 ergibt sich z.B. einfach aus zeitlich aufeinander folgenden Messwerte-Paaren als (numerische) Ableitung der einen Messgröße nach der anderen Messgröße (Differenzenquotient), Z.B. ΔP_{Pedal}/ΔSP_{edal}.

Die Zustände der beiden Subsysteme, welche durch die Einzelsystem-Systemsteifigkeiten C1, C2 charakterisiert werden, werden in einem Gesamtsystem-Plausibilisierungsblock 32 zu einer aktuellen Gesamtsystemsteifigkeit C_Ges verrechnet, z.B. durch Addition. Im Falle eines Fehlers in der Bremsanlage kann anhand einer Beurteilung des verbleibenden Gesamtsystemsteifigkeit C_Ges eine Bewarnung 33 erfolgen.

Z.B. kann eine fahrzeugspezifische Untergrenze S_{c_Ges} der Gesamtsystemsteifigkeit definiert werden, welche eingehalten werden soll. Das Einhalten einer Untergrenze S_{c_Ges} der Gesamtsystemsteifigkeit gewährt die Verfügbarkeit der bei Systemausfall benötigten Rückfallebene (beide Subsysteme werden durch das Öffnen/Schließen der Trenn- und Zuschaltventile 39, 45 miteinander verbunden). Wird die geforderte Untergrenze S_{c_Ges} der Gesamtsystemsteifigkeit unterschritten, so wird eine Fehlermeldung 33 an das Fahrzeug über die Fahrzeugschnittstelle 15 ausgegeben ("Rizckfallebene gestört").

Optional kann bei Erkennung eines schlechten Entlüftungszustandes der Bremsanlage in das Fahrzeugmanagement eingegriffen werden (z.B. in Form einer Geschwindigkeitsbegrenzung, einer Aufforderung zum Werkstattbesuch, eines Eintrags in einen Fehlerspeicher, eines späteren Startens einer Entlüftungsroutine).

Des Weiteren werden z.B. für die beiden Subsysteme beim Verlassen Ihrer nominellen Kennfelder 29, 31 nach entsprechender Plausibilisierung ebenfalls Fehlermeldungen in einem Fehlerspeicher abgelegt.

Ein Vorteil der Erfindung ist es, dem Fahrzeugführer ein Maximum an der funktionalen Verfügbarkeit der Bremsanlage zu gewährleisten. Durch das oben beschriebene Verfahren wird die Bremsanlage in ihrer Funktionalität überwacht und auf mögliche funktionale Fehler plausibilisiert.

## Patentansprüche

1. Verfahren zur Überwachung einer Bremsanlage für Kraftfahrzeuge, die in einer sog. "Brake-by-wire"-Betriebsart sowohl von einem Fahrzeugführer als auch unabhängig vom Fahrzeugführer ansteuerbar ist, mit
• einer mittels eines Bremspedals (34) betätigbaren hydraulischen Betätigungseinrichtung (2) mit einem Hauptbremszylinder, an den Radbremsen (6), insbesondere in zumindest zwei Bremskreisen (12, 13), angeschlossen sind, und einer Simulationseinrichtung (40), welche mindestens ein elastisches Element (30) umfasst und dem Fahrzeugführer ein angenehmes Pedalgefühl vermittelt, wobei eine den Druck des Hauptbremszylinders charakterisierende dritte Messgröße (P_{Pedal}) und eine einen Betätigungsweg des Bremspedals (34) charakterisierende vierte Messgröße (S_{Pedal}) erfasst werden,
• einer elektrisch steuerbaren Druckbereitstellungseinrichtung (3), welche durch eine Zylinder-Kolben-Anordnung gebildet wird, deren Kolben (46) durch einen elektromechanischen Aktuator (47) betätigbar ist, und welche mit den Radbremsen verbunden oder verbindbar ist, wobei eine den Druck der Druckbereitstellungseinrichtung (3) charakterisierende erste Messgröße (P_{DBE}) und eine eine Position oder Lage des Kolbens (46) charakterisierende zweite Messgröße (S_{DBE}) erfasst werden, und
• einer elektronischen Steuer- und Regeleinheit (5), wobei zur Überwachung eines Funktionszustandes der Bremsanlage die erfassten Messwerte der ersten und der zweiten Messgröße (S_{DBE}, P_{DBE}) mit einem vorgegebenen Kennfeld (31) von erster und zweiter Messgröße verglichen werden (30), **dadurch gekennzeichnet, dass** aus den Messwerten der ersten und zweiten Messgröße (P_{DBE}, S_{DBE}) eine aktuelle Systemsteifigkeit (C2) der Druckbereitstellungseinrichtung (3) als Ableitung der ersten Messgröße (P_{DBE}) nach der zweiten Messgröße (S_{DBE}) oder umgekehrt ermittelt wird, dass zur Überwachung des Funktionszustandes der Bremsanlage die erfassten Messwerte der dritten und der vierten Messgröße (P_{Pedal}, S_{Pedal}) mit einem vorgegebenen Kennfeld (29) von dritter und vierter Messgröße verglichen werden (28), dass aus den Messwerten der dritten und vierten Messgröße (P_{Pedal}, S_{Pedal}) eine aktuelle Systemsteifigkeit (C1) der Betätigungseinrichtung (2) als Ableitung der dritten Messgröße (P_{Pedal}) nach der vierten Messgröße (S_{Pedal}) oder umgekehrt ermittelt wird, und dass aus den aktuellen Systemsteifigkeiten (C1, C2) von Betätigungseinrichtung (2) und Druckbereitstellungseinrichtung (3) eine Gesamtsteifigkeit (C_GES) bestimmt wird (32), welche überwacht wird.

2. Verfahren nach Anspruch 1, **dadurch gekennzeichnet, dass** jeweils eine Plausibilisierung (21) der Messwerte der ersten und zweiten Messgröße (P_{DBE}, S_{DBE}) durchgeführt wird, und dass nur plausibilisierte Messwerte der jeweiligen Messgröße (P_{DBE}, S_{DBE}) zum Vergleich mit dem Kennfeld (31) von erster und zweiter Messgröße herangezogen werden.

3. Verfahren nach Anspruch 1 oder 2, **dadurch gekennzeichnet, dass** jeweils eine Plausibilisierung (21) der Messwerte der dritten und vierten Messgröße (P_{Pedal}, S_{Pedal}) durchgeführt wird, und dass nur plausibilisierte Messwerte der jeweiligen Messgröße (P_{Pedal}, S_{Pedal}) zum Vergleich mit dem Kennfeld (29) von dritter und vierter Messgröße herangezogen werden.

4. Verfahren nach einem der Ansprüche 1 bis 3, **dadurch gekennzeichnet, dass** eine Fehlermeldung (33) ausgegeben wird, wenn die Gesamtsteifigkeit (C_GES) einen vorgegebenen Grenzwert (S_{c_Ges}) unterschreitet.

5. Verfahren nach einem der Ansprüche 1 bis 4, **dadurch gekennzeichnet, dass** eine, insbesondere teilsystemspezifische, Fehlermeldung ausgegeben wird, wenn die Messwerte der ersten und zweiten Messgröße nicht in einem zulässigen Bereich des vorgegebenen Kennfelds (31) von erster und zweiter Messgröße liegen und/oder wenn die Messwerte der dritten und vierten Messgröße nicht in einem zulässigen Bereich des vorgegebenen Kennfelds (29) von dritter und vierter Messgröße liegen.

6. Bremsanlage für Kraftfahrzeuge, die in einer sog. "Brake-by-wire"-Betriebsart sowohl von einem Fahrzeugführer als auch unabhängig vom Fahrzeugführer ansteuerbar ist, mit
• einer mittels eines Bremspedals (34) betätigbaren hydraulischen Betätigungseinrichtung (2) mit einem Hauptbremszylinder, an den Radbremsen (6), insbesondere in zumindest zwei Bremskreisen (12, 13), angeschlossen sind, und einer Simulationseinrichtung (40), welche mindestens ein elastisches Element (30) umfasst und dem Fahrzeugführer ein angenehmes Pedalgefühl vermittelt,
• einer elektrisch steuerbaren Druckbereitstellungseinrichtung (3), welche durch eine Zylinder-Kolben-Anordnung gebildet wird, deren Kolben (46) durch einen elektromechanischen Aktuator (47) betätigbar ist, und welche mit den Radbremsen verbunden oder verbindbar ist,
• einer ersten Sensorvorrichtung (10, 11) zur Erfassung einer den Druck der Druckbereitstellungseinrichtung (3) charakterisierenden ersten Messgröße (P_{DBE}),
• einer zweiten Sensorvorrichtung (9) zur Erfassung einer eine Position oder Lage des Kolbens (46) der Druckbereitstellungseinrichtung (3) charakterisierenden zweiten Messgröße (S_{DBE}),
• einer dritten Sensorvorrichtung (8) zur Erfassung einer den Druck des Hauptbremszylinders charakterisierenden dritte Messgrößen (P_{Pedal}),
• einer vierten Sensorvorrichtung (7) zur Erfassung einer einen Betätigungsweg des Bremspedals (34) charakterisierenden vierten Messgröße (S_{Pedal}), und
• einer elektronischen Steuer- und Regeleinheit (5), welche Mittel (30) zum Vergleichen der erfassten Messwerte der ersten und der zweiten Messgröße (S_{DBE}, P_{DBE}) mit einem vorgegebenen Kennfeld (31) von erster und zweiter Messgröße umfasst, **dadurch gekennzeichnet, dass** die elektronische Steuerund Regeleinheit (5) Mittel (28) zum Vergleichen der erfassten Messwerte der dritten und der vierten Messgröße (P_{Pedal}, S_{Pedal}) mit einem vorgegebenen Kennfeld (29) von dritter und vierter Messgröße umfasst, und dass in der elektronischen Steuer- und Regeleinheit (5) ein Verfahren zur Überwachung der Bremsanlage gemäß einem der Ansprüche 1 bis 5 durchgeführt wird.

7. Bremsanlage nach Anspruch 6, **dadurch gekennzeichnet, dass** eine der Sensorvorrichtungen (7, 8, 9, 10, 11), insbesondere alle Sensorvorrichtungen, redundant ausgeführt sind.

8. Bremsanlage nach Anspruch 6 oder 7, **dadurch gekennzeichnet, dass** in der elektronischen Steuer- und Regeleinheit (5) Mittel (21) vorgesehen sind, so dass nur plausibilisierte oder zuverlässige Messwerte der entsprechenden Messgrößen (P_{DBE}, S_{DBE}, P_{Pedal}, S_{Pedal}) zum Vergleich mit dem Kennfeld (29, 31) oder den Kennfeldern herangezogen werden.

## Claims

1. Method for monitoring a brake system for motor vehicles, which can be controlled in a so-called "brake-by-wire" operating mode both by a vehicle driver and also independently of the vehicle driver, with
• a hydraulic actuation device (2) operated by means of a brake pedal (34) with a brake master cylinder, to which wheel brakes (6) are connected, especially in at least two brake circuits (12, 13), and a simulation device (40), which comprises at least one elastic element (30) and provides the vehicle driver with a pleasant pedal feel, wherein a third measurement variable (P_{Pedal}) characterizing the pressure of the brake master cylinder and a fourth measurement variable (S_{Pedal}) characterizing an actuating travel of the brake pedal (34) are detected,
• an electrically controllable pressure generating device (3), which is formed by a cylinder-piston assembly, whose piston (46) can be operated by an electromechanical actuation device (47), and which is connected or can be connected to the wheel brakes, wherein a first measurement variable (P_{DBE}) characterizing the pressure of the pressure generating device (3) and a second measurement variable (S_{DBE}) characterizing a position or location of the piston (46) are detected, and
• an electronic control and regulating unit (5),
wherein for monitoring a functional state of the brake system the detected measurement values of the first and the second measurement variable (S_{DBE}, P_{DBE}) are compared with a specified characteristic field (31) of first and second measurement variables (30), **characterized in that** an actual system stiffness (C2) of the pressure generating device (3) is determined from the measurement values of the first and second measurement variables (P_{DBE}, S_{DBE}) as the derivative of the first measurement variable (P_{DBE}) with respect to the second measurement variable (S_{DBE}) or vice-versa, **in that** for monitoring the functional state of the brake system the detected measurement values of the third and the fourth measurement variables (P_{Pedal}, S_{Pedal}) are compared (28) with a specified characteristic field (29) of third and fourth measurement variables, **in that** an actual system stiffness (C1) of the actuation device (2) is determined from the measurement values of the third and fourth measurement variables (P_{Pedal}, S_{Pedal}) as the derivative of the third measurement variable (P_{Pedal}) with respect to the fourth measurement variable (S_{Pedal}) or vice-versa, and **in that** an overall stiffness (C_GES), which is monitored, is determined (32) from the actual system stiffnesses (C1, C2) of the actuation device (2) and the pressure generating device (3).

2. Method according to Claim 1, **characterized in that** a plausibility check (21) of the measurement values of the first and second measurement variables (P_{DBE}, S_{DBE}) is carried out in each case, and that only plausibility-checked measurement values of the respective measurement variables (P_{DBE}, S_{DBE}) are used for comparison with the characteristic field (31) of first and second measurement variables.

3. Method according to Claim 1 or 2, **characterized in that** a plausibility check (21) of the measurement values of the third and fourth measurement variables (P_{Pedal}, S_{Pedal}) is carried out in each case, and that only plausibility-checked measurement values of the respective measurement variables (P_{Pedal}, S_{Pedal}) are used for comparison with the characteristic field (29) of third and fourth measurement variables.

4. Method according to any one of Claims 1 to 3, **characterized in that** an error message (33) is output if the overall stiffness (C_GES) is less than a specified limit value (S_{c_Ges}).

5. Method according to any one of Claims 1 to 4, **characterized in that** an error message, especially a subsystem-specific error message, is output if the measurement values of the first and second measurement variables do not lie within a permissible area of the specified characteristic field (31) of first and second measurement variables and/or if the measurement values of the third and fourth measurement variables do not lie within a permissible area of the specified characteristic field (29) of third and fourth measurement variables.

6. Brake system for motor vehicles, which can be controlled in a so-called "brake-by-wire" operating mode both by a vehicle driver and also independently of the vehicle driver, with
• a hydraulic actuation device (2) operated by means of a brake pedal (34) with a master brake cylinder, to which wheel brakes(6) are connected, in particular in at least two brake circuits (12, 13), and a simulation device (40), which comprises at least one elastic element (30) and provides the vehicle driver with a pleasant pedal feel,
• an electrically controllable pressure generating device (3), which is formed by a cylinder-piston assembly, whose piston (46) is operated by means of an electromechanical actuation device (47), and which is connected or can be connected to the wheel brakes,
• a first sensor device (10, 11) for detecting a first measurement variable (P_{DBE}) characterizing the pressure of the pressure generating device (3),
• a second sensor device (9) for detecting a second measurement variable (S_{DBE}) characterizing a position or location of the piston (46) of the pressure generating device (3),
• a third sensor device (8) for detecting a third measurement variable (P_{Pedal}) characterizing the pressure of the brake master cylinder,
• a fourth sensor device (7) for detecting a fourth measurement variable (S_{Pedal}) characterizing an actuating travel of the brake pedal (34), and
• an electronic control and regulating unit (5) which comprises a means (30) for comparing the detected measurement values of the first and the second measurement variables (S_{DBE}, P_{DBE}) with a specified characteristic field (31) of first and second measurement variables, **characterized in that** the electronic control and regulating unit (5) comprises a means (28) of comparing the detected measurement values of the third and the fourth measurement variables (P_{Pedal}, S_{Pedal}) with a specified characteristic field (29) of third and fourth measurement variables, and **in that** in the electronic control and regulating unit (5) a method for monitoring the brake system according to any one of the Claims 1 to 5 is carried out.

7. Brake system according to Claim 6, **characterized in that** one of the sensor devices (7, 8, 9, 10, 11), especially all sensor devices, is/are implemented in redundant form.

8. Brake system according to Claim 6 or 7, **characterized in that** in the electronic control and regulating unit (5) means(21) are provided so that only plausibility checked or reliable measurement values of the corresponding measurement variables (P_{DBE}, S_{DBE}, P_{Pedal}, S_{Pedal}) are used for comparison with the characteristic field (29, 31) or the characteristic fields.

## Revendications

1. Dispositif de surveillance d'un système de freinage pour véhicule automobile, qui peut être commandé dans un mode de fonctionnement appelé « Brake-by-wire » tant par un conducteur du véhicule que indépendamment du conducteur du véhicule, comportant
• un dispositif d'actionnement hydraulique (2) actionnable au moyen d'une pédale de frein (34) comportant un cylindre de freinage principal, auquel sont raccordés des freins de roue (6), notamment dans au moins deux circuits de freinage (12,13), et un dispositif de simulation (40), qui comprend au moins un élément élastique (30) et communique au conducteur du véhicule un toucher de pédale agréable, dans lequel une troisième grandeur de mesure (P_{pedal}) caractérisant la pression du cylindre de freinage principal et une quatrième grandeur de mesure (S_{pedal}) caractérisant un trajet d'actionnant de la pédale de frein (34) sont détectées,
• un dispositif de fourniture de pression commandable électriquement (3), qui est formé par un ensemble cylindre-piston, dont le piston (46) peut être actionné par un actionneur électromécanique (47), et qui est relié ou peut être relié aux freins de roue, dans lequel une première grandeur de mesure (P_{DBE}) caractérisant la pression du dispositif de fourniture de pression et une deuxième grandeur de mesure (S_{DBE}) caractérisant une position ou une situation du piston (46) sont détectées et
• une unité de commande et de régulation électronique (5), dans lequel pour la surveillance d'un état fonctionnel du système de freinage les valeurs de mesure détectées de la première et la deuxième valeur de mesure (S_{DBE}, P_{DBE}) sont comparées (30) avec un diagramme caractéristique prescrit (31) de la première et la deuxième grandeur de mesure, **caractérisé en ce que** d'après les valeurs de mesure de la première et la deuxième grandeur de mesure (P_{DBE}, S_{DBE}) une rigidité de système actuelle (C2) du dispositif de fourniture de pression (3) est déterminée comme un dérivé de la première grandeur de mesure (P_{DBE}) après la deuxième grandeur de mesure (S_{DBE}) ou inversement, de telle sorte qu'à des fins de surveillance de l'état fonctionnel du système de freinage les valeurs de mesure détectées de la troisième et la quatrième grandeur de mesure (P_{pedal}, S_{pedal}) sont comparées avec un diagramme caractéristique prescrit (29) de la troisième et la quatrième grandeur de mesure (28), de sorte que d'après les valeurs de mesure de la troisième et quatrième grandeur de mesure (P_{pedal}, S_{pedal}) une rigidité de système actuelle (C1) du dispositif d'actionnement (2) est déterminée comme une dérivée de la troisième grandeur de mesure (P_{pedal}) après la quatrième grandeur de mesure (S_{pedal}) ou inversement, et **en ce que** d'après les rigidités de système actuelles (C1,C2) du dispositif d'actionnement (2) et du dispositif de fourniture de pression (3) une rigidité totale (C_GES) est déterminée, laquelle est surveillée.

2. Procédé selon la revendication 1, **caractérisé en ce que** respectivement une plausibilisation (21) des valeurs de mesure de la première et la deuxième grandeur de mesure est effectuée (P_{DBE}, S_{BDE}) et **en ce que** seules les valeurs de mesure plausibilisées grandeurs de mesures respectives (P_{DBE}, S_{BDE}) sont utilisées pour la comparaison avec le diagramme caractéristique (31) de la première et la deuxième grandeur de mesure.

3. Procédé selon la revendication 1 ou 2, **caractérisé en ce que** respectivement une plausibilisation (21) des valeurs de mesure de la troisième et la quatrième grandeur de mesure (P_{pedal}, S_{pedal}) est effectuée et **en ce que** seules les valeurs de mesure plausibilisées grandeurs de mesures respectives (P_{pedal}, S_{pedal}) sont utilisées pour la comparaison avec le diagramme caractéristique (29) de la troisième et la quatrième grandeur de mesure.

4. Procédé selon une des revendications 1 à 3, **caractérisée en ce que** un rapport d'erreur (33) est émis, quand la rigidité totale (C_GES) descend sous une valeur limite prescrite (S_{c_Ges}).

5. Procédé selon une des revendications 1 à 4, **caractérisé en ce que** un rapport d'erreur, notamment spécifique système partiel, est émis quand les valeurs de mesure de la première et la deuxième grandeur de mesure ne sont pas situées dans une plage autorisée du diagramme caractéristique prescrit (31) de la première et la deuxième grandeur de mesure et/ou quand les valeurs de mesure de la troisième et la quatrième grandeur de mesure ne sont pas situées dans une plage autorisée du diagramme caractéristique prescrit (29) de la troisième et la quatrième grandeur de mesure.

6. Système de freinage pour véhicules automobiles, qui peut être commandé dans un mode de fonctionnement appelé « Brake-by-wire » tant par un conducteur du véhicule que indépendamment du conducteur du véhicule, comportant
• un dispositif d'actionnement hydraulique (2) actionnable au moyen d'une pédale de frein (34) comportant un cylindre de freinage principal, auquel sont raccordés des freins de roue (6), notamment dans au moins deux circuits de freinage (12,13), et un dispositif de simulation (40), qui comprend au moins un élément élastique (30) et communique au conducteur du véhicule un toucher de pédale agréable,
• un dispositif de fourniture de pression commandable électriquement (3), qui est formé par un ensemble cylindre-piston, dont le piston (46) peut être actionné par un actionneur électromécanique (47), et qui est relié ou peut être relié aux freins de roue,
• un premier dispositif de détection (10,11) pour détecter une première grandeur de mesure (P_{DBE}) caractérisant la pression du dispositif de fourniture de pression (3),
• un deuxième dispositif de détection (9) pour détecter une deuxième grandeur caractérisant (S_{DBE}) une position ou une situation du piston (46) du dispositif de fourniture de pression (3),
• un troisième dispositif de détection (8) pour détecter une troisième grandeur de mesure (P_{pedal}) caractérisant la pression du cylindre de freinage principal,
• un quatrième dispositif de détection (7) pour détecter une quatrième grandeur de mesure (S_{pedal}) caractérisant un trajet d'actionnement de la pédale de frein (34) et
• une unité de commande et de régulation électronique (5), qui comprend des moyens (30) pour comparer les valeurs de mesure détectées de la première et la deuxième grandeur de mesure (S_{DBE}, P_{DBE}) avec un diagramme caractéristique prescrit (31) de la première et la deuxième grandeur de mesure, **caractérisée en ce que** l'unité de commande et de régulation électronique (5) comprend des moyens pour comparer les valeurs de mesure détectées de la troisième et la quatrième valeur de mesure (P_{pedal}, S_{pedal}) avec un diagramme caractéristique prescrit (29) de la troisième et quatrième grandeur de mesure, et **en ce que** dans l'unité de commande et de régulation électronique (5) un procédé de surveillance du système de freinage selon une des revendications 1 à 5 est mis en oeuvre.

7. Système de freinage selon la revendication 6, **caractérisé en ce que** un des dispositifs de détection (7,8,9,10,11), notamment tout les dispositifs de détection sont conçus de manière redondante.

8. Système de freinage selon la revendication 6 ou 7, **caractérisé en ce que** dans l'unité de commande et de régulation électronique (5) des moyens (21) sont prévus de telle sorte que seules les valeurs de mesure autorisées ou plausibilisées des grandeur de mesure correspondantes (P_{DBE}, S_{DBE}, P_{pedal}, S_{pedal}) sont utilisées à des fins de comparaison avec le diagramme caractéristique (29,31) ou les diagrammes caractéristiques.
